# EUROPEAN PATENT APPLICATION

(11) **EP 4 775 888 A1**
(43) Date of publication of application: **15.07.2026**
(21) Application number: 25225155.8
(22) Date of filing: 18.12.2025
(51) Int. Cl.: F24C 14/02

(54) **COOKING APPLIANCE AND METHOD OF CONTROLLING THE SAME**

(30) Priority: 26.12.2024 KR 20240197507
(71) Applicant: LG Electronics Inc., Yeongdeungpo-gu Seoul 07336 (KR)
(72) Inventor: KIM, Gyeongmin, Seoul 07796 (KR); PARK, Hyun Woo, Seoul 07796 (KR); KIM, Doo Hyun, Seoul 07796 (KR)
(74) Representative: Ter Meer Steinmeister & Partner

(57) **Abstract**

Disclosed herein are a cooking appliance and a method of controlling the same. The disclosure includes a first heating operation of driving a broil heater and a fan, and a second heating operation of driving a convection heater and the fan, and is characterized in that the rotational speed of the fan in the first heating operation and the rotational speed of the fan in the second heating operation are the same.

## Description

### TECHNICAL FIELD

The present disclosure relates to a cooking appliance, and more particularly, to a cooking appliance capable of implementing a self-cleaning function and a method of controlling the same.

### BACKGROUND

A cooking appliance is one of the home appliances for cooking food, and is an appliance installed in a kitchen area and used for cooking food according to the user's intention. Such cooking appliances can be classified in various ways depending on the heat source, shape, and type of fuel used.

In classifying cooking appliances by the way of cooking, they can be classified into open-type and closed-type cooking appliances, depending on the type of space where food is placed. Closed-type cooking appliances include ovens, microwave ovens, etc., while open-type cooking appliances include cooktops, hobs, griddles, etc.

A closed-type cooking appliance is a cooking appliance that seals the space in which food is placed and heats the sealed space to cook the food. A closed-type cooking appliance is provided with a cooking chamber, which is a space where food is placed and that is sealed when the food is to be cooked. This cooking chamber serves as the space where the food is actually cooked.

A closed-type cooking appliance is provided with a pivotally door that selectively opens and closes the cooking chamber. The door is pivotally installed in or at a main body, which has the cooking chamber formed therein, via a door hinge provided between the main body and the door. This door can selectively open and close the cooking chamber by pivoting around the portion coupled with the main body via the door hinge.

A heat source is provided in the interior space of the cooking chamber, which is opened and closed by the door, and heats the cooking chamber. A gas burner, an electric heater, or the like may be used as such a heat source.

Furthermore, when heating and cooking meat or food containing meat using the closed-type cooking appliance as described above, lipids such as fats or oils from the food float inside the cooking chamber and stick to the wall surfaces of the cooking chamber, contaminating the interior walls of the cooking chamber.

The lipids stuck (adhered) to the wall surfaces of the cooking chamber in this way undergo so-called polymerization, and are firmly fixed, thereby turning into a state that is challenging to clean (remove).

Some of the cooking appliances released recently are equipped with a self-cleaning function that automatically removes contaminants, such as lipids as described above or the like.

The self-cleaning function of cooking appliances is a function of automatically removing contaminants, such as lipids or the like, stuck (adhered) to the wall surfaces of the cooking chamber.

Self-cleaning in cooking appliances is primarily performed in the form of using a thermal decomposition method known as so-called pyrolysis, which burns and removes contaminants, by heating the interior of the cooking chamber with a heat source such as a burner or heater and allowing the temperature inside the cooking chamber to remain at a high temperature for an extended period when contaminants such as lipids adhere to the wall surfaces of the cooking chamber.

According to the self-cleaning performed as described above, poor results of removing contaminants are typically seen at the front side of the cooking chamber where the door is located. In other words, good contaminant removal is seen in the portions adjacent to the heat source and convection device, whereas relatively poor contaminant removal is seen in the front region of the cooking chamber, which is farther from the heat source and convection device.

This is because the heat flow by the operation of the convection device fails to properly reach the front region of the cooking chamber, preventing the temperature of the wall surface in that portion from reaching a temperature that allows for cleaning.

Therefore, there is a need for a design for the operation of a heat source and a convection device to enable the state of the front region of the cooking chamber to be changed to a state that allows for cleaning.

### SUMMARY / Technical Problems

It is an object to provide a cooking appliance capable of effectively removing contaminants firmly fixed to the wall surfaces of a cooking chamber.

Another objective is to provide a cooking appliance and a method of controlling the same, which can improve the results of self-cleaning performance of the cooking appliance while suppressing an increase in power consumption.

### Technical Solutions

The object is solved by the features of the independent claims. Preferred embodiments are given in the dependent claims.

A method of controlling a cooking appliance, which is one embodiment of the disclosure to achieve the above objectives, is characterized by sequentially performing a first heating operation of driving a broil heater and a fan, and a second heating operation of driving a convection heater and the fan.

Another aspect of the disclosure includes a first heating operation of driving a broil heater and a fan, and a second heating operation of driving a convection heater and the fan, and is characterized in that the rotational speed of the fan in the first heating operation and the rotational speed of the fan in the second heating operation are the same.

A method of controlling a cooking appliance in accordance with one aspect of the disclosure is a method of controlling a cooking appliance, wherein the cooking appliance includes a cavity forming a cooking chamber, a broil heater installed on one surface of the cavity and disposed inside the cooking chamber, a convection heater installed on another surface of the cavity and disposed inside or outside the cooking chamber, and a fan configured to operate to be able to send hot air into the cooking chamber, and may include a first heating operation of driving the broil heater and the fan; and a second heating operation of driving the convection heater and the fan.

In another aspect a method of controlling a cooking appliance is provided, wherein the cooking appliance includes a cavity forming a cooking chamber, a broil heater disposed inside the cooking chamber, a convection heater disposed inside or outside the cooking chamber, and a fan being able to send hot air into the cooking chamber. The method includes driving in a first heating operation the broil heater and the fan; and in a second heating operation the convection heater and the fan.

The rotational speed of the fan in the first heating operation and the rotational speed of the fan in the second heating operation may be preferably the same.

Furthermore, in the first heating operation, the rotational speed of the fan may be preferably maintained at a set speed.

Moreover, in the first heating operation and the second heating operation, the rotational speed of the fan may be maintained at a set speed.

The first heating operation may be performed before the second heating operation.

The execution duration of the second heating operation may be longer than or equal to the execution duration of the first heating operation.

Moreover, the disclosure may further include a third heating operation of driving the broil heater and the convection heater.

In the third heating operation, driving of the broil heater and driving of the convection heater may be performed alternately.

In the third heating operation, it is preferable that the fan is driven and the rotational speed of the fan is maintained at a set speed.

Moreover, the rotational speed of the fan in the first heating operation, the rotational speed of the fan in the second heating operation, and the rotational speed of the fan in the third heating operation may be the same.

In the third heating operation, an alternating interval between the driving of the broil heater and the driving of the convection heater may be shorter than an execution duration of the first heating operation and an execution duration of the second heating operation.

The amount of heat per unit time supplied to the cooking chamber by the first heating operation may be higher than the amount of heat per unit time supplied to the cooking chamber by the second heating operation.

Moreover, a cooking appliance in accordance with another aspect of the disclosure may include a cavity forming a cooking chamber; a broil heater disposed inside the cooking chamber; a convection heater disposed inside or outside the cooking chamber; a fan module including a fan configured to rotate to be able to send hot air into the cooking chamber; and a control unit configured to control the operation of the broil heater, the convection heater, and the fan module.

Preferably, the control unit may sequentially perform a first heating operation of driving the broil heater and the fan, and a second heating operation of driving the convection heater and the fan.

Preferably, the broil heater may be installed on one surface of the cavity.

Preferably, the convection heater may be installed on another surface of the cavity.

The disclosure may further include a door disposed on a front side of the cavity and configured to open and close the cooking chamber.

Furthermore, the broil heater is preferably installed on a top surface of the cavity.

The convection heater and the fan module are preferably installed on a rear surface of the cavity.

The fan module preferably includes a BLDC motor provided to be able to maintain a speed of the fan at a set speed in a process of performing the first heating operation and the second heating operation.

The fan module is preferably provided to be able to rotate the fan in forward and reverse directions.

The amount of heat per unit time supplied to the cooking chamber by the broil heater is preferably higher than the amount of heat per unit time supplied to the cooking chamber by the convection heater.

During the first heating operation, the convection heater may be off, whereas only the broil heater may be on.

At the end of the first heating operation, the broil heater may be switched off for a short time, before being switch on again for a short time.

During the second heating operation, the convection heater may be mostly continuously switched on.

Close to the end of the second heating operation, the convection heater may be shortly switched off for short time before being switch on again.

The temperature during the first and second heating operation may be kept one the same level, preferably above 400°C but not higher than 500°C.

The fan may run during the first and second heating operation, whereas the speed may be maintained.

### Advantageous Effects

The disclosure can enable the removal of contaminants from the front region of the cooking chamber, which is a region where the proper removal of contaminants is difficult when performing the self-cleaning, to be achieved at a level equal to or higher than that of the other regions of the cooking chamber by allowing heat supply to the front region of the cooking chamber to begin at an earlier time point and last a longer period of time than the other regions of the cooking chamber.

The cooking appliance and the method of controlling the same of the disclosure can effectively remove contaminants stuck to the wall surfaces of the cooking chamber, particularly contaminants firmly fixed to the wall surfaces of the front region of the cooking chamber.

Furthermore, the disclosure can effectively improve the results of self-cleaning performance of the cooking appliance while suppressing an increase in power consumption by adjusting the operating timing of the broil heater and the rotational speed of the fan 26 so that the optimal amount of heat that allows for effective thermal decomposition in the front region of the cooking chamber can be supplied at the optimal time.

### BRIEF DESCRIPTION OF DRAWINGS

The accompanying drawings constitute a part of the specification, illustrate one or more embodiments, and together with the specification, explain the disclosure, wherein:
FIG. 1 is a perspective view showing a cooking appliance in accordance with one embodiment of the disclosure;
FIG. 2 is a front view showing a door open state of the cooking appliance shown in FIG. 1;
FIG. 3 is a side sectional view showing the internal structure of the cooking appliance shown in FIG. 1;
FIG. 4 is a side sectional view showing the structure of the convection device shown in FIG. 3;
FIGS. 5 and 6 are front sectional views schematically showing the pattern of hot air flows within the cooking chamber;
FIGS. 7 and 8 are side sectional views schematically showing the pattern of hot air flows within the cooking chamber;
FIG. 9 is a configuration diagram schematically showing the configuration of a cooking appliance in accordance with one embodiment of the disclosure;
FIG. 10 is a flowchart showing a control process of a cooking appliance in accordance with one embodiment of the present disclosure;
FIG. 11 is a diagram schematically showing a driving control state in accordance with the method of controlling the cooking appliance illustrated in FIG. 10;
FIG. 12 is a diagram schematically showing a region to be primarily heated when performing a first heating operation;
FIG. 13 is a diagram schematically showing a region to be primarily heated when performing a second heating operation; and
FIG. 14 is a diagram schematically showing a driving control state of a conventional cooking appliance.

### DETAILED DESCRIPTION

The above-described objectives, features, and advantages will be described in detail below with reference to accompanying drawings, and accordingly, those having ordinary skill in the art to which the disclosure pertains will be able to readily embody the technical ideas of the disclosure. In describing the present disclosure, if specific descriptions of known technologies related to the disclosure are deemed to unnecessarily obscure the gist of the disclosure, the detailed descriptions will be omitted. Hereinafter, preferred embodiments in accordance with the present disclosure will be described in detail with reference to the accompanying drawings. In the drawings, the same reference numerals are used to indicate identical or similar components.

Although terms such as "first," "second," etc., are used to describe various components, these components are not limited by such terms, as a matter of course. These terms are used merely to distinguish one component from another, and surely, a first component may also be a second component, unless otherwise specified.

The present disclosure is not limited to the embodiments disclosed below, but may be modified in various ways and implemented in a variety of different forms. The present embodiments are provided solely to ensure the disclosure is complete and to fully inform those skilled in the art of the scope of the disclosure. Therefore, it should be understood that the disclosure is not limited to the embodiments disclosed below, but includes not only substituting or adding the configuration of one embodiment to that of another embodiment, but also all modifications, equivalents, and alternatives that fall within the technical ideas and scope of the disclosure.

The accompanying drawings are merely intended to facilitate understanding of the embodiments disclosed herein; the technical ideas disclosed herein are not limited by the accompanying drawings, and it should be understood that they encompass all modifications, equivalents, and alternatives falling within the spirit and technical scope of the present disclosure. The components in the drawings may be exaggerated or reduced in size or thickness in light of ease of understanding or the like; however, this should not be construed as limiting the scope of protection of the disclosure.

The terms used herein are used only to describe particular implementations or embodiments and are not intended to limit the present disclosure. Further, singular expressions include plural expressions, unless the context explicitly dictates otherwise. Terms such as "include" and "consist of" herein are intended to specify the presence of features, numbers, steps, operations, components, parts, or combinations thereof described herein. In other words, it should be understood that terms such as "include" and "consist of" herein do not preclude the possibility of the presence or addition of one or more other features, numbers, steps, operations, components, parts, or combinations thereof.

Terms containing ordinal numbers, such as "first," "second," and the like, may be used to describe various components, but these components are not limited by such terms. These terms are used solely for the purpose of distinguishing one component from another.

When a component is said to be "connected" or "coupled" to another component, it is to be understood that it may be directly connected or coupled to said another component, but that other components may also be present in between. In contrast, when a component is said to be "directly connected" or "directly coupled" to another component, it is to be understood that there are no other components present in between.

When a component is said to be "on" or "under" another component, it is to be understood that it may not only be positioned directly on or under said another component, but that other components may also be present in between.

Unless otherwise defined, all terms used herein, including technical or scientific terms, have the same meaning as commonly understood by those having ordinary skill in the art to which the disclosure pertains. Terms such as those defined in commonly used dictionaries should be interpreted as having a meaning consistent with their meaning in the context of the relevant art, and shall not be construed in an idealized or overly formal sense unless explicitly defined in the present application.

In the state where a cooking appliance is placed on the floor, the direction in which a door is installed relative to the center of the cooking appliance is defined as a forward direction. Therefore, the direction toward the interior of the cooking appliance with the door open becomes a rearward direction. For convenience, these forward and rearward directions can be referred to as a first direction. Then, the forward direction can be referred to as one direction of the first direction, and the rearward direction can be referred to as the other direction of the first direction.

In addition, the gravitational direction can be defined as a downward direction, and the direction opposite to the gravitational direction can be defined as an upward direction.

Furthermore, the horizontal direction perpendicular to the front-rear direction of the cooking appliance, i.e., the width direction of the cooking appliance when viewing the cooking appliance from the front of the door of the cooking appliance, can be referred to as a left-right direction. For convenience, the left-right direction can be referred to as a second direction. Then, the right side can be referred to as one direction of the second direction, and the left side can be referred to as the other direction of the second direction.

Moreover, the width direction of the cooking appliance may also be referred to as a lateral direction. Then, the right side can be referred to as one side of the lateral direction, and the left side can be referred to as the other side of the lateral direction.

In addition, an up-down direction can be referred to as a third direction. Then, the upward direction can be referred to as one direction of the third direction, and the downward direction can be referred to as the other direction of the third direction.

Furthermore, the up-down direction described above can be referred to as a vertical direction. Then, the front-rear direction and the left-right direction, i.e., the first direction and the second direction, can be referred to as the horizontal direction.

Throughout the specification, "A and/or B" denotes A, B, or A and B, unless otherwise specified, and "C to D" denotes C or greater and D or less, unless otherwise specified.

### [Overall Structure of Cooking Appliance]

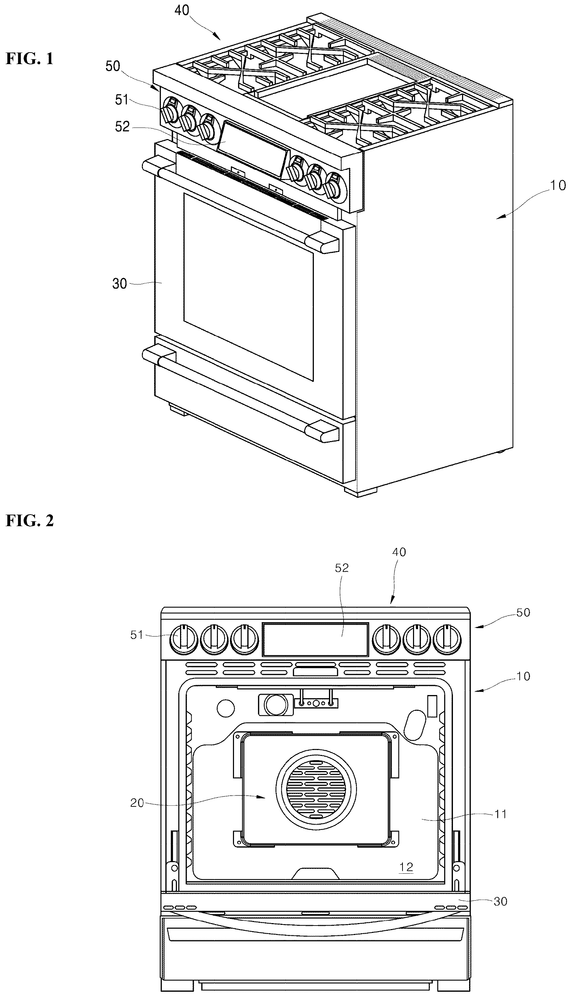

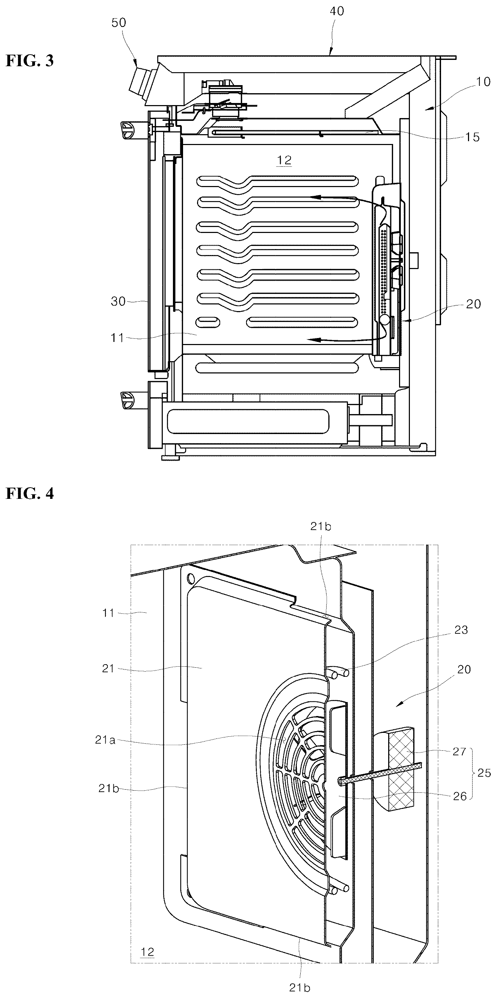

FIG. 1 is a perspective view showing a cooking appliance in accordance with one embodiment of the disclosure, FIG. 2 is a side sectional view showing the internal structure of the cooking appliance shown in FIG. 1, and FIG. 3 is a front view showing a door open state of the cooking appliance shown in FIG. 1.

Referring to FIGS. 1 to 3, the cooking appliance may have its exterior formed by a main body 10. The main body 10 may be provided in a form that includes a roughly rectangular prism shape, and may be formed from a material having a predetermined strength in order to protect multiple parts installed in the interior space thereof.

The main body 10 includes a cavity 11 that forms the framework of the main body 10. The cavity 11 may be formed in the shape of a hexahedron with the front open, and a cooking chamber 12 is provided inside the cavity 11.

The cavity 11 may be formed in the shape of a hexahedron with the front open, and the cooking chamber 12 may be formed inside this cavity 11. In other words, the cooking chamber 12 may be formed as a roughly hexahedral space disposed inside the cavity 11 and may be formed as a space open toward the front.

With this cooking chamber 12 sealed, food can be cooked while the interior of the cooking chamber 12 is heated. In other words, in the cooking appliance of the embodiment provided as a closed-type cooking appliance, the cooking chamber 12 is the space where food is actually cooked.

The cooking appliance is provided with a heating device that heats the cooking chamber 12. The heating device may be provided as a burner using gas fuel and/or a heater using electricity. As such, the structure of the heating device can be modified depending on the type of heat source used.

As one example, the heating device may include a convection device 20 disposed at the rear side of the cooking chamber 12. The convection device 20 ensures the interior space of the cooking chamber 12 can be heated uniformly by flowing air while drawing in air from inside the cooking chamber 12, heating it, and then discharging it back into the cooking chamber 12.

The heating device may also include a broil burner or broil heater 15. The broil burner or broil heater 15 may be disposed at the upper portion of the cooking chamber 12 and heat the interior space of the cooking chamber 12 from the upper portion of the cooking chamber 12.

The cooking appliance may be provided with a pivotally door 30 that selectively opens and closes the cooking chamber 12. As one example, the door 30 may be provided in the form of opening and closing the cooking chamber 12 in a pull-down manner in which its upper end pivots up and down around its lower end. But it may be also moved in another direction having the hinges at the vertical side.

A cooktop unit 40, which is provided to heat food or a container holding food to thereby cook the food, may be disposed at the upper portion of the main body 10. The cooktop unit 40 may be provided with a top plate that closes the upper end of the main body 10 while forming the exterior of the top surface.

The central portion of the cooktop unit 40 may be provided with at least one or more heating units for heating food or a container holding the food to be cooked. For example, the heating unit may be provided as a heating device that uses gas fuel.

As another example, the heating unit may be provided as an induction heater that uses electricity. As such, the structure of the heating unit can be modified depending on the type of heat source used.

The upper portion of the front surface of the cooking appliance, i.e., the upper front surface of the cavity 11 may be provided with a control panel 50. The control panel 50 may form part of the exterior of the front surface of the cooking appliance. This control panel 50 may be provided with knobs 51 for adjusting the operation of the cooking appliance, a display 52 for displaying the operating status of the cooking appliance, and the like.

The interior space of the main body 10, i.e., the space between the cooktop unit 40 and the cooking chamber 12, may be provided with an electrical component compartment, which provides a space where electrical components are located. The electrical component compartment may be the space formed between the cooktop unit 40 and the cooking chamber 12, or may be a conceptual space obtained by combining the space formed between the cooktop unit 40 and the cooking chamber 12 and the space inside the cooktop unit 40. The front surface of the electrical component compartment may be covered by the control panel 50 or by the door 30.

### [Structure of Heating Device]

FIG. 4 is a side sectional view showing the structure of the convection device shown in FIG. 3,

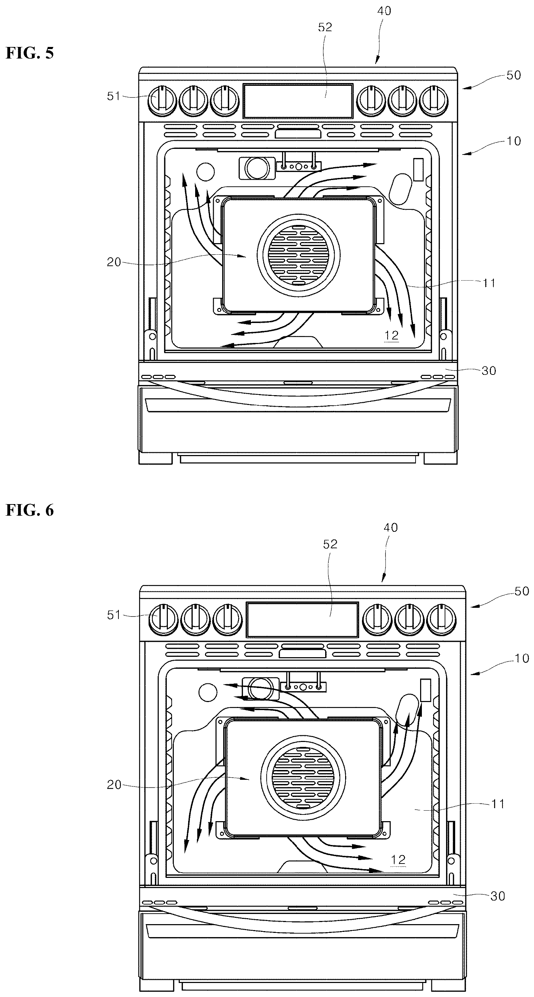

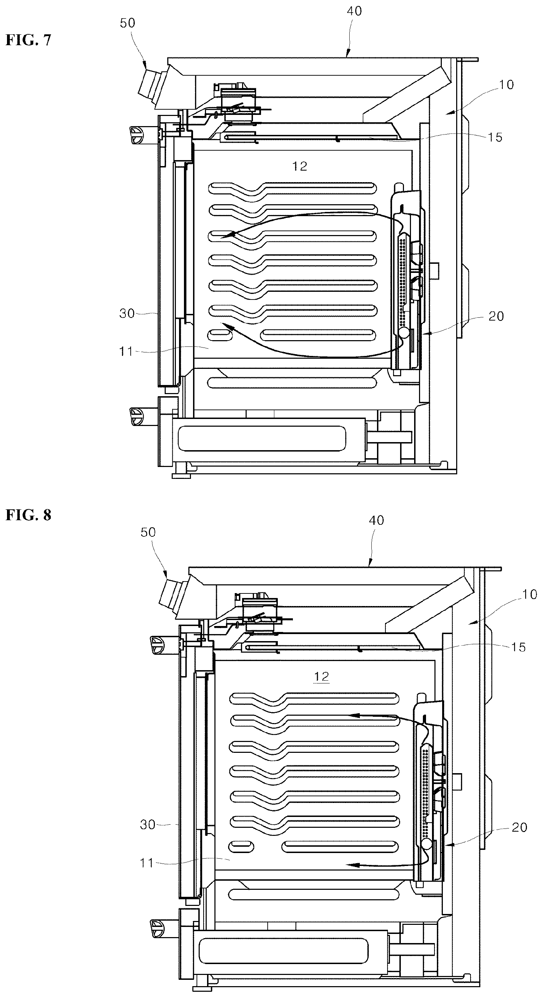

FIGS. 5 and 6 are front sectional views schematically showing the pattern of hot air flows within the cooking chamber, and FIGS. 7 and 8 are side sectional views schematically showing the pattern of hot air flows within the cooking chamber.

As shown in FIGS. 3 to 4, the cooking appliance of the present embodiment may include a heating device for heating the interior of the cooking chamber 12. As one example, the heating device may include a broil heater 15 and a convection device 20.

The broil heater 15 may be installed on one surface of the cavity 11 and disposed inside the cooking chamber 12. As one example, the broil heater 15 may be installed on the top surface of the cavity 11 and disposed at the upper portion of the cooking chamber 12. It may be a curved or bent electrical resistance heater placed on the upper surface of the cooking chamber. However, it may be also a gas burner.

The broil heater 15 can heat the interior of the cooking chamber 12 from the upper portion of the cooking chamber 12. In other words, the broil heater 15 is provided to apply heat directly to food from the upper portion of the cooking chamber 12, preferably to the food below the broil heater 15.

The convection device 20 may be installed on a surface of the cavity 11 other than the surface on which the broil heater 15 is installed, and may be disposed inside or outside the cooking chamber 12. As one example, the convection device 20 may be installed on the rear surface of the cavity 11 and disposed on the rear side of the cooking chamber 12. This convection device 20 may include a fan cover 21, a convection heater 23, and a fan module 25. So the convection device 20 may be installed on another surface or wall or side of the cooking chamber. Preferably it is placed on or at a side wall of the cooking chamber, further preferably at the rear wall.The fan cover 21 may be disposed on a side of the cooking chamber 12 adjacent to the rear surface of the cavity 11 and may be installed on the rear surface of the cavity 11. This fan cover 21 can form a space, which is separated from the cooking chamber 12, inside the convection device 20.

As one example, the fan cover 21 may be formed in a hexahedral shape, with its front surface facing the door 30 and its side surfaces facing the side surfaces of the cavity 11. An intake port 21a may be disposed at the center of the front surface of the fan cover 21, and air inside the cooking chamber 12 can flow into the interior space of the convection device 20 through the intake port 21a.

The convection heater 23 and the fan module 25 may be disposed in the interior space of the convection device 20 formed by the fan cover 21. The convection heater 23 and the fan module 25 disposed in this way may be installed on the rear surface of the cavity 11.

The convection heater 23 is provided to be able to heat air introduced into the interior space of the convection device 20. This convection heater 23 may be provided as a heater that uses electricity or as a burner that uses gas fuel.

The air heated by the convection heater 23 in the interior space of the convection device 20 may be discharged into the cooking chamber 12 by the fan module 25. In other words, hot air can be generated in the interior space of the convection device 20 by the convection heater 23 and the fan module 25, and this hot air can be discharged into the cooking chamber 12 through discharge ports 21b.

The discharge ports 21b may be provided on the fan cover 21. The discharge ports 21b may be disposed on at least one of the side, top, or bottom surfaces of the fan cover 21. In the embodiment, the discharge ports 21b are exemplified as being disposed on both side surfaces, the top surface, and the bottom surface of the fan cover 21, respectively.

Each discharge port 21b may be formed in the shape of penetrating the side, top, and/or bottom surface of the fan cover 21. The hot air generated inside the convection device 20 can be discharged into the cooking chamber 12 through the discharge ports 21b.

The fan module 25 is disposed in the interior space of the convection device 20 surrounded by the fan cover 21, and is provided to be rotatable around a front-rear directional shaft. The rotation shaft of this fan module 25 may be disposed at a position where it overlaps in the front-rear direction with the intake port 21a disposed approximately at the center of the fan cover 21.

The fan module 25 can draw in air from the cooking chamber 12 into the interior space of the convection device 20 through the intake port 21a, and discharge air heated in the interior space of the convection device 20 into the cooking chamber 12 through the discharge ports 21b.

For example, the fan module 25 can generate a flow of hot air that moves backward toward the interior space of the convection device 20 in the cooking chamber 12 and moves in the centrifugal direction in the interior space of the convection device 20. This fan module 25 may include a fan 26 and a fan motor 27.

The fan 26 is provided to be able to rotate around a front-rear directional shaft to thereby generate hot air. As one example, the fan 26 may include a rotating plate 26a and blades 26b.

The rotating plate 26a can be coupled with a rotation shaft rotated by the fan motor 27 and can rotate around this rotation shaft. For example, the rotating plate 26a may be formed in a circular plate shape with the rotation shaft coupled to its center.

The blades 26b may be formed to protrude forward from the rotating plate 26a. As one example, a plurality of blades 26b may be arranged radially around the rotation shaft, and these blades 26b can rotate together with the rotating plate 26a.

The fan module 25 is provided to be able to adjust the rotational direction of the fan 26. This fan module 25 may be provided to be able to rotate the fan 26 in both directions around the front-rear directional shaft. For example, the fan module 25 is provided to be able to rotate the fan 26 in the forward or reverse direction as needed.

According to the embodiment, when the fan 26 rotates in the forward direction, the fan 26 can blow hot air in a direction between the forward direction and the centrifugal direction (see FIG. 5). Further, when the fan 26 rotates in the reverse direction, the fan 26 can blow hot air in a direction between the reverse direction and the centrifugal direction (see FIG. 6).

As one example, assuming that the cooking chamber 12 is divided into four regions when viewed from the front, i.e., assuming that the cooking chamber 12 is divided into a left upper region 12a, a left lower region 12b, a right upper region 12d, and a right lower region 12c, the main flow of hot air generated by the fan 26 rotating in the forward direction can primarily flow toward the left upper region 12a and the right lower region 12c (see FIG. 5). Further, the main flow of hot air provided by the fan 26 rotating in the reverse direction can primarily flow toward the left lower region 12b and the right upper region 12d (see FIG. 6).

The fan module 25 is provided to be able to adjust the rotational speed of the fan 26. For example, the rotational speed of the fan 26 can be adjusted by adjusting the output of the fan motor 27. As one example, a BLDC motor may be applied as the fan motor 27. In other words, the fan module 25 may include a BLDC motor provided to be able to rotate the fan 26 in forward and reverse directions at two or more speeds.

The rotational speed of the fan 26 can affect the travel distance of the hot air discharged from the inside of the convection device 20 into the cooking chamber 12. For example, as the rotational speed of the fan 26 increases, the hot air can travel farther forward (see FIG. 7), and as the rotational speed of the fan 26 decreases, the hot air can travel a shorter distance forward (see FIG. 8).

In other words, the main flow of hot air can flow quickly to a location closer to the door 30 as the rotational speed of the fan 26 increases (see FIG. 7), and can flow primarily toward a rather rear region of the cooking chamber 12 as the rotational speed of the fan 26 decreases (see FIG. 8).

### [Functions and Effects of Cooking Appliance]

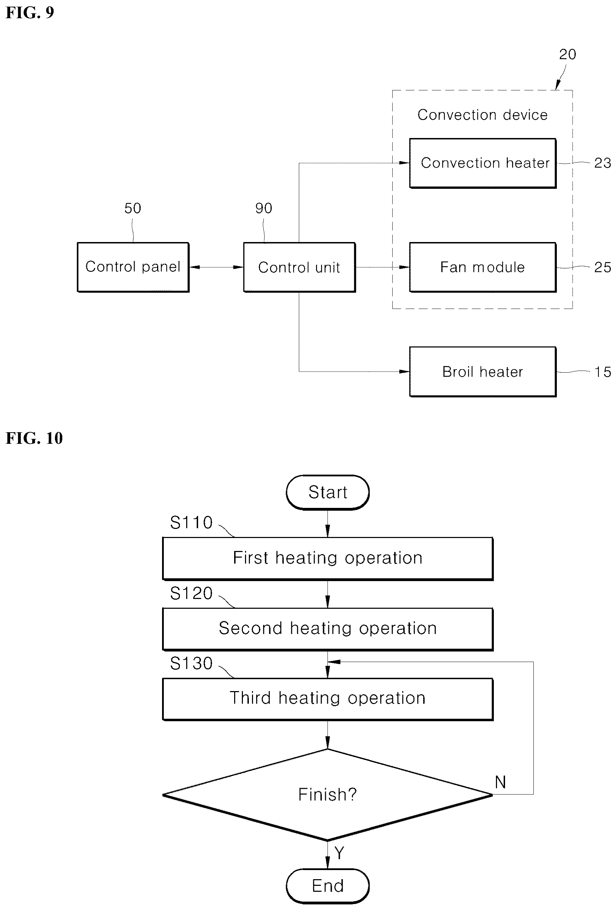

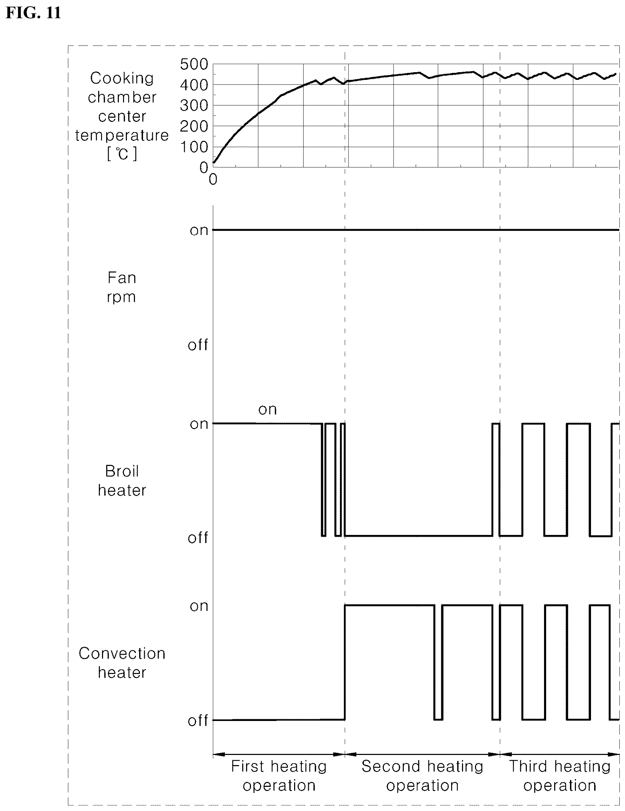

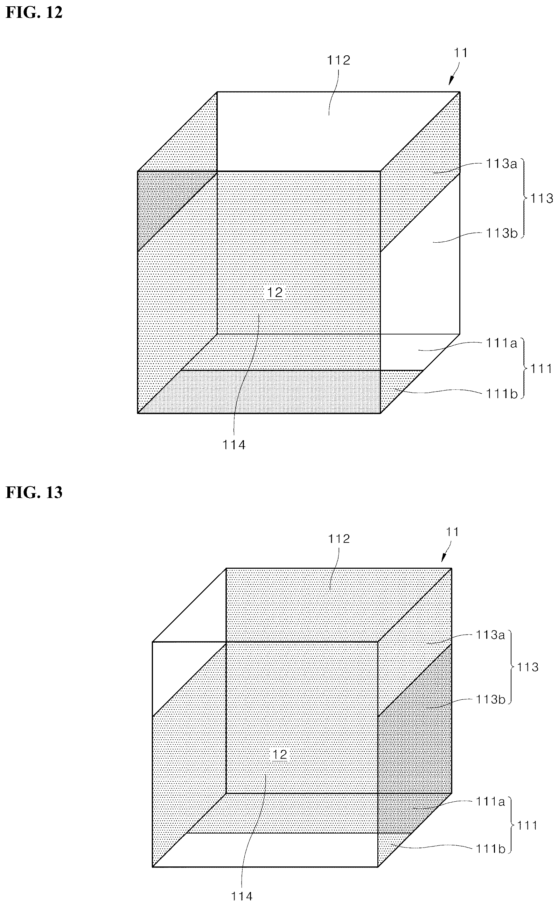

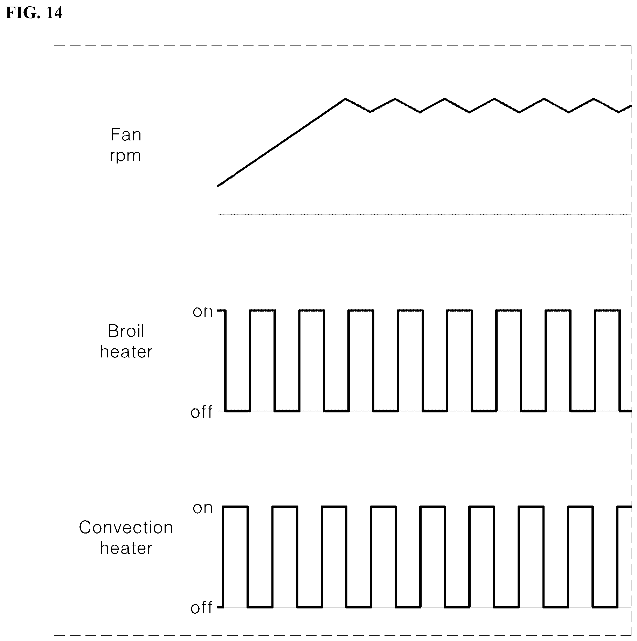

FIG. 9 is a configuration diagram schematically showing the configuration of a cooking appliance in accordance with one embodiment of the disclosure, FIG. 10 is a flowchart showing a control process of a cooking appliance in accordance with one embodiment of the disclosure, and FIG. 11 is a diagram schematically showing a driving control state in accordance with the method of controlling the cooking appliance illustrated in FIG. 10. Further, FIG. 12 is a diagram schematically showing a region to be primarily heated when performing a first heating operation, FIG. 13 is a diagram schematically showing a region to be primarily heated when performing a second heating operation, and FIG. 14 is a diagram schematically showing a driving control state of a conventional cooking appliance.

Referring to FIGS. 3, 4, and 9, the cooking appliance of the embodiment may include a control unit 90. The control unit 90 may be provided to control the operation of the cooking appliance. For example, the control unit 90 can control the operation of heating devices, such as the broil heater 15, the convection device 20, and the like, according to input signals input via knobs 51, switches, or the like provided on the control panel 50.

As one example, the control unit 90 can control the operation of the broil heater 15 and the convection heater 23, and can control the operation of the fan module 25 as well. For example, the control unit 90 can control the operation of the convection heater 23 in a manner of adjusting the on/off state of the convection heater 23. Further, the control unit 90 can control the operation of the fan module 25 so as to be able to perform at least one of an operation of changing the rotational direction of the fan 26 and an operation of changing the rotational speed of the fan 26.

This control unit 90 can adjust the rotational direction of the fan 26 by adjusting the driving direction of the fan motor 27, and can also adjust the rotational speed of the fan 26 by adjusting the output of the fan motor 27.

The user can select a cooking mode by operating knobs 51, switches, or the like provided on the control panel 50. When one of a variety of cooking modes is selected, the cooking appliance can operate the heating device in order to provide a cooking function in accordance with the selected cooking mode.

According to the embodiment, the cooking appliance can provide a self-cleaning function. The self-cleaning function is a function that makes it possible to burn and remove contaminants by heating the interior of the cooking chamber 12 with the heating unit and allowing the temperature inside the cooking chamber 12 to be maintained at a high temperature for an extended period. In the process of implementing the self-cleaning function, the control unit 90 can control the operation of the heating devices, such as the broil heater 15, the convection device 20, and the like.

As one example thereof, as shown in FIGS. 4 and 9 to 11, when the user selects an operating mode for implementing the self-cleaning function by operating the knobs 51, switches, or the like provided on the control panel 50, the cooking appliance can first perform a first heating operation (S110). When the cooking appliance performs the first heating operation, the control unit 90 can drive the broil heater 15 and the fan 26. In other words, when the first heating operation begins, the operation of the broil heater 15 and the fan 26 can begin.

The first heating operation can be performed for a first set time. While the first heating operation is performed, the interior space of the cooking chamber 12 and each wall surface of the cavity 11 can be heated by the heat emitted from the broil heater 15.

In addition, while the first heating operation is performed, the fan 26 can generate hot air while rotating, and the hot air generated by the operation of the fan 26 can flow inside the cooking chamber 12. The hot air flowing inside the cooking chamber 12 in this way can serve to ensure that the heat emitted from the broil heater 15 can be transferred to the entire regions of the cooking chamber 12 and is well distrubited.

In the embodiment, the output of the broil heater 15 is exemplified as being higher than the output of the convection heater 23. In other words, the amount of heat per unit time supplied by the broil heater 15 to the cooking chamber 12 is exemplified as being higher than the amount of heat per unit time supplied by the convection heater 23 to the cooking chamber 12. For example, the output of the broil heater 15 may be 3,800 W, and the output of the convection heater 23 may be 2,500 W.

For example, the broil heater 15, which can heat the cooking chamber 12 with a higher output than the convection heater 23, can be operated in the first heating operation. Accordingly, the temperature of the cooking chamber 12 can be quickly raised to the temperature required for performing self-cleaning.

In addition, according to the embodiment, the broil heater 15 is disposed further forward than the convection heater 23. Accordingly, the first heating operation can heat the cooking chamber 12 in the form of concentrating a high amount of heat on a rather forward region of the cooking chamber 12.

Along therewith, the fan 26 rotates at a set speed and generates hot air, thereby allowing the heat emitted from the broil heater 15 to be transferred to the entire regions inside the cooking chamber by the hot air. As one example, the set speed may be a rotational speed of the fan 26 that allows the main flow of hot air generated by the fan 26 to be concentrated on the front region of the cooking chamber 12 adjacent to the door 30. For example, the set speed may be 2,000 to 2,400 rpm.

As the broil heater 15 and the fan 26 are driven as described above, a significant portion of the heat supplied into the cooking chamber 12 by the broil heater 15 can be supplied intensively to the front region of the cooking chamber 12 adjacent to the door 30.

For example, when the cooking appliance performs the first heating operation, heat can be supplied intensively to the upper region 113a of the side surface 113 of the cavity 11 and its surrounding space, the front region 111b of the bottom surface 111 of the cavity 11 and its surrounding space, and the adjacent space adjacent to the open front surface 114 of the cavity 11, as shown in FIGS. 9 to 12.

The upper region 113a of the side surface 113 of the cavity 11 and its surrounding space are places very close to the broil heater 15 installed on the top surface 112 of the cavity 11. Further, the front region of the bottom surface 111 of the cavity 11 and its surrounding space, and the adjacent space adjacent to the open front surface 114 of the cavity 11 are where the main flow of hot air generated by the fan 26 rotating at the set speed is concentrated.

Accordingly, when the cooking appliance performs the first heating operation, heating of the upper region 113a of the side surface 113 of the cavity 11 and its surrounding space, the front region of the bottom surface 111 of the cavity 11 and its surrounding space, and the adjacent space adjacent to the open front surface 114 of the cavity 11 can be performed more predominantly than heating of the rest of the spaces.

Furthermore, in the first heating operation, the rotational speed of the fan 26 can be maintained at a set speed. In other words, the rotational speed of the fan 26 can be maintained at the set speed with little change while the first heating operation is performed. For example, the rotational speed of the fan 26 can be maintained at 2,100 to 2,300 rpm while the first heating operation is performed. Accordingly, while the cooking appliance performs the first heating operation, heat concentration on the front region of the cooking chamber 12 can be maintained continuously.

After the first heating operation has been performed for the first set time, the cooking appliance can perform a second heating operation (S120). The first set time may be set to a time required for the temperature of the cooking chamber 12 to rise to a temperature required for performing self-cleaning. As one example, a first heating operation execution duration for raising the temperature of the cooking chamber to approximately 400 °C may be set to the first set time. For example, the cooking appliance may perform the first heating operation until the temperature of the cooking chamber rises to approximately 400 °C, and then perform the second heating operation.

When the cooking appliance performs the second heating operation, the control unit 90 can drive the convection heater 23 and the fan 26. In other words, when the second heating operation begins, the operation of the convection heater 23 and the fan 26 can begin. At this time, the operation of the broil heater 15 can be suspended. The embodiment exemplifies that when the cooking appliance performs the second heating operation, the operation of the convection heater 23 and the fan 26 is performed, whereas the operation of the broil heater 15 is suspended.

The second heating operation may be performed for a second set time. While the second heating operation is performed, the interior space of the cooking chamber 12 and each wall surface of the cavity 11 can be heated by the heat emitted from the convection heater 23.

In addition, while the second heating operation is performed, the fan 26 can generate hot air while rotating, and the hot air generated by the operation of the fan 26 can flow inside the cooking chamber 12. The hot air flowing inside the cooking chamber 12 in this way can serve to ensure that the heat emitted from the convection heater 23 can be transferred to the entire regions of the cooking chamber 12.

As one example, the rotational speed of the fan 26 in the second heating operation can be maintained at a set speed. In other words, the rotational speed of the fan 26 in the first heating operation can be maintained the same as that in the second heating operation. Accordingly, a significant portion of the heat supplied into the cooking chamber 12 by the convection heater 23 can be supplied intensively to the front region of the cooking chamber 12 adjacent to the door 30.

As a result of the first heating operation being performed for the first set time, the temperature of the cooking chamber 12 rises to the temperature required for performing self-cleaning, and heating of the upper and front regions of the cooking chamber 12 can be achieved sufficiently. In contrast, heating of the lower and rear regions of the cooking chamber 12 may have been achieved less than that of the upper and front regions of the cooking chamber 12.

When the cooking appliance performs the second heating operation, heat can be supplied intensively to the rear surface 112 of the cavity 11 and its surrounding space, the lower region 113b of the side surface 113 of the cavity 11 and its surrounding space, and the rear region 111a of the bottom surface 111 of the cavity 11 and its surrounding space.

The rear surface 112 of the cavity 11 and its surrounding space are places very close to the convection heater 23 installed on the rear surface of the cavity 11. Further, since the convection heater 23 is disposed lower than the broil heater 15, the lower region 113b of the side surface 113 of the cavity 11 and the rear region 111a of the bottom surface 111 of the cavity 11 and their surrounding spaces can also be considered places adjacent to the convection heater 23.

Accordingly, when the cooking appliance performs the second heating operation, heating of the rear surface 112 of the cavity 11 and its surrounding space, the lower region 113b of the side surface 113 of the cavity 11 and its surrounding space, and the rear region 111a of the bottom surface 111 of the cavity 11 and its surrounding space can be performed more predominantly than heating of the rest of the spaces, as shown in FIGS. 9 to 11 and FIG. 13.

Furthermore, in the second heating operation as well, the rotational speed of the fan 26 can be maintained at a set speed. In other words, the rotational speed of the fan 26 can be maintained at the set speed with little change throughout the duration for which both the first and second heating operations are performed. Accordingly, heat supply to the front region of the cooking chamber 12 is continuously made even while the cooking appliance performs the second heating operation.

For example, heating of the front region of the cooking chamber 12 is performed at a weaker level when the second heating operation is performed than when the first heating operation is performed, but the temperature in the front region of the cooking chamber 12 can continue to remain at a temperature level elevated as a result of performing the first heating operation.

In other words, when the second heating operation is performed, heat supply is concentrated on the rear surface 112 of the cavity 11 and its surrounding space, the lower region 113b of the side surface 113 of the cavity 11 and its surrounding space, and the rear region 111a of the bottom surface 111 of the cavity 11 and its surrounding space, but heat supply to the front region of the cooking chamber 12 can also continue at a level sufficient to maintain the temperature of that region.

Typically, because the convection device 20 is disposed at the rear side of the cooking chamber, a greater heat loss occurs in the front region of the cooking chamber 12, which is farther from the convection device 20, than in the rear region of the cooking chamber 12, which is closer to the convection device 20. In view of this point, the present embodiment ensures that the speed of the fan 26 is maintained at the set speed when the first and second heating operations are performed, thereby allowing heat supply to the front region of the cooking chamber 12 to be maintained at a certain level or higher.

Accordingly, the cooking appliance of the embodiment can induce thermal decomposition to occur continuously and actively in the front region of the cooking chamber 12 by allowing the temperature in the front region of the cooking chamber 12 to be continuously maintained at a temperature level elevated as a result of performing the first heating operation.

As described above, the output of the convection heater 23 is exemplified as being lower than the output of the broil heater 15 in the present embodiment. Accordingly, the temperature of the cooking chamber 12 rises rapidly when the first heating operation is performed, whereas the temperature of the cooking chamber 12 when the second heating operation is performed can be maintained at a level approximately equal to the temperature at the end of the first heating operation.

In addition, a high amount of heat is supplied to the front region of the cooking chamber 12 by the broil heater 15 when the first heating operation is performed, and accordingly, the temperature in the front region of the cooking chamber 12 can rise rapidly to the temperature required for performing self-cleaning.

Furthermore, a relatively lower amount of heat is supplied to the cooking chamber 12 by the convection heater 23 when the second heating operation is performed than the amount of heat supplied when the first heating operation is performed, allowing the temperature in the entire regions of the cooking chamber 12 to be maintained uniformly at a temperature suitable for performing self-cleaning.

Typically, since a significant heat loss occurs in the front region of the cooking chamber 12, a greater amount of heat needs to be supplied to the front region of the cooking chamber 12 so as to maintain the temperature in the front region of the cooking chamber 12 at a level similar to the temperatures in the rest of the regions of the cooking chamber 12, and to effectively remove contaminants in the front region of the cooking chamber 12.

In view of this point, the cooking appliance of the embodiment allows a greater amount of heat to be supplied to the front region of the cooking chamber 12 than to the other regions of the cooking chamber 12 by ensuring that the heat supply to the front region of the cooking chamber 12 begins at an earlier time point and lasts for a longer period of time than to the other regions of the cooking chamber 12.

Moreover, an execution duration of the second heating operation is exemplified as being longer than or equal to an execution duration of the first heating operation in the present embodiment. In other words, the length of the second set time may be set longer than the length of the first set time.

As described above, since the convection heater 23 is operated instead of the broil heater 15 in the second heating operation and the output of the convection heater 23 is lower than that of the broil heater 15, more time may be needed in order for the temperature of the rear surface 112 of the cavity 11 and its surrounding space, the lower region 113b of the side surface 113 of the cavity 11 and its surrounding space, and the rear region 111a of the bottom surface 111 of the cavity 11 to rise sufficiently to the temperature required for self-cleaning than when heating the front region of the cooking chamber 12 by the first heating operation.

In view of this point, the execution duration of the second heating operation is set longer than or equal to the execution duration of the first heating operation in the present embodiment. By the first and second heating operations performed in this way, the temperature in the entire regions of the cooking chamber 12 can be effectively maintained at a high temperature suitable for performing self-cleaning.

After the second heating operation has been performed for the second set time as described above, the cooking appliance can perform a third heating operation (S130). When the cooking appliance performs the third heating operation, the control unit 90 can drive the broil heater 15 and the convection heater 23.

In the third heating operation, the broil heater 15 and the convection heater 23 can be driven alternately. In the third heating operation, the alternating interval between the driving of the broil heater 15 and the driving of the convection heater 23 may be set shorter than the execution duration of the first heating operation and the execution duration of the second heating operation.

For example, if the execution duration of the first heating operation and the execution duration of the second heating operation are each approximately 2 to 4 minutes, then a pattern in which after the broil heater 15 is driven for approximately 10 seconds, the convection heater 23 is driven for approximately 10 seconds, and then the broil heater 15 is driven again for approximately 10 seconds can be repeated in the third heating operation.

According to the embodiment, the third heating operation can be performed after the temperature in the entire regions of the cooking chamber 12 has reached a temperature suitable for performing self-cleaning as the cooking appliance has completed the execution of the first and second heating operations.

When the cooking appliance performs the third heating operation, the driving of the broil heater 15 and the driving of the convection heater 23 can alternate at a very short interval compared to the execution duration of the first heating operation and the execution duration of the second heating operation. The cooking appliance of the embodiment, which performs the third heating operation in this way, can continuously maintain the temperature in the entire regions of the cooking chamber 12 at a temperature suitable for removing contaminants while performing the self-cleaning operation.

Furthermore, in the third heating operation, the rotational speed of the fan 26 can be maintained at a set speed. Accordingly, the rotational speed of the fan in the first heating operation, the rotational speed of the fan 26 in the second heating operation, and the rotational speed of the fan 26 in the third heating operation can remain identical. As a result, the temperature in the front region of the cooking chamber 12 can be maintained continuously at a temperature suitable for removing contaminants, thereby enabling thermal decomposition in the front region of the cooking chamber 12 to occur continuously and actively.

In conventional cooking appliances, an AC motor is typically applied as a fan motor for rotating the fan of a convection device. An inverter is required to adjust the rotational speed of an AC motor, but mounting an inverter to a small AC motor for driving a fan is challenging. Therefore, adjusting the rotational speed of a fan with an AC motor applied thereto is practically impossible.

Moreover, the rotational speed of the fan rotated by the AC motor exhibits a tendency to gradually increase as the temperature of the cooking chamber rises, and exhibits a tendency to continuously fluctuate without maintaining a constant value even after that, as shown in FIG. 14. For example, the rotational speed of the fan at the initial stage of the driving of the AC motor when the cooking appliance performs the self-cleaning operation is approximately 1,000 rpm, then the rotational speed of the fan increases to approximately 1,800 rpm as the temperature of the cooking chamber rises, and even after that, the rotational speed of the fan fails to maintain 1,800 rpm but keeps fluctuating.

Furthermore, in conventional cooking appliances, when the cooking appliance raises the temperature of the cooking chamber in order to perform the self-cleaning operation, the heating device operates in a pattern where the alternation between the driving of the broil heater and the driving of the convection heater is repeated at short time intervals. In other words, in conventional cooking appliances, operations of the same type as the first and second driving operations of the present embodiment are not performed, but only operations of the type similar to the third driving operation of the embodiment are performed.

Accordingly, the temperature in the front region of the cooking chamber is unlikely to rise sufficiently at the initial stage of performing the self-cleaning operation in conventional cooking appliances. This is because, in conventional cooking appliances, not only is the broil heater unable to operate sufficiently at the initial stage of performing the self-cleaning operation, but the hot air also fails to properly reach the front region of the cooking chamber due to the slow rotational speed of the fan.

Moreover, in conventional cooking appliances, because the rotational speed of the fan cannot remain constant at a speed that can allow hot air to sufficiently reach the front region of the cooking chamber, the temperature in the front region of the cooking chamber can hardly remain at a temperature suitable for removing contaminants. Accordingly, the state of removal of contaminants in the front region of the cooking chamber is likely to be poor in conventional cooking appliances.

In contrast, the cooking appliance of the embodiment can ensure sufficient operating time for the high-output broil heater 15 at the initial stage of performing the self-cleaning operation by performing the first heating operation at the initial stage of performing the self-cleaning operation, and simultaneously enable the rotational speed of the fan 26 to remain at a rotational speed that can allow hot air to sufficiently reach the front region of the cooking chamber 12, as shown in FIGS. 9 to 13.

This cooking appliance of the embodiment can not only raise the temperature of the cooking chamber 12 quickly to the temperature required for performing self-cleaning, but also continuously maintain heat concentration on the front region of the cooking chamber 12, thereby enabling heat supply to the front region of the cooking chamber 12 to begin at an earlier time point and last a longer period of time than the other regions of the cooking chamber 12.

Thus, the cooking appliance of the embodiment can effectively remove contaminants stuck to the wall surfaces of the cooking chamber, particularly contaminants firmly fixed to the wall surfaces of the front region of the cooking chamber by enabling the removal of contaminants from the front region of the cooking chamber 12, which is a region where the proper removal of contaminants is difficult when performing the self-cleaning, to be achieved at a level equal to or higher than that of the other regions of the cooking chamber 12.

In addition, the cooking appliance of the embodiment can effectively improve the results of self-cleaning performance of the cooking appliance while suppressing an increase in power consumption by adjusting the operating timing of the broil heater 15 and the rotational speed of the fan 26 so that the optimal amount of heat that allows for effective thermal decomposition in the front region of the cooking chamber 12 can be supplied at the optimal time.

The disclosure has been described with reference to the embodiments shown in the drawings, which, however, are merely illustrative, and those having ordinary skill in the art to which the disclosure pertains will appreciate that various modifications and other equivalent embodiments are possible therefrom. Therefore, the true technical scope of protection of the disclosure shall be determined by the following claims.

### [Description of Reference Numerals]

10: Main body
11: Cavity
12: Cooking chamber
15: Broil heater
20: Convection device
21: Fan cover
23: Convection heater
25: Fan
30: Door
40: Cooktop unit
50: Control panel
90: Control unit

## Claims

1. A method of controlling a cooking appliance, wherein the cooking appliance comprises a cavity (11) forming a cooking chamber (12), a broil heater (15) disposed inside the cooking chamber (12), a convection heater (23) disposed inside or outside the cooking chamber (12), and a fan (26) being able to send hot air into the cooking chamber (12), the method comprising:
a first heating operation of driving the broil heater (15) and the fan (26); and
a second heating operation of driving the convection heater (23) and the fan (26).

2. The method of claim 1, wherein a rotational speed of the fan (26) in the first heating operation and a rotational speed of the fan (26) in the second heating operation are the same.

3. The method of claim 1 or 2, wherein, in the first heating operation, a rotational speed of the fan (26) is maintained at a set speed and/or in the first heating operation and the second heating operation, a rotational speed of the fan (26) is maintained at a set speed.

4. The method of any one of the preceding claims, wherein the first heating operation is performed before the second heating operation, and
an execution duration of the second heating operation is longer than or equal to an execution duration of the first heating operation.

5. The method of any one of the preceding claims, further comprising:
a third heating operation of driving the broil heater (15) and the convection heater (23).

6. The method of claim 5, wherein, in the third heating operation, driving of the broil heater (15) and driving of the convection heater (23) are performed alternately.

7. The method of claim 6, wherein, in the third heating operation, the fan (26) is driven, and a rotational speed of the fan (26) is maintained at a set speed.

8. The method of claim 5 or 6, wherein, in the third heating operation, an alternating interval between the driving of the broil heater (15) and the driving of the convection heater (23) is shorter than an execution duration of the first heating operation and an execution duration of the second heating operation.

9. The method of any one of the preceding claims, wherein an amount of heat per unit time supplied to the cooking chamber (12) by the first heating operation is higher than an amount of heat per unit time supplied to the cooking chamber (12) by the second heating operation.

10. The method of any one of the preceding claims, wherein during the first heating operation a front portion of the cooking chamber being close to the inside of the door, is heater quicker, than in the second heating period.

11. A cooking appliance comprising:
a cavity (11) forming a cooking chamber (12);
a broil heater (15) disposed inside the cooking chamber (12);
a convection heater (23) disposed inside or outside the cooking chamber (12);
a fan module (25) being able to send hot air into the cooking chamber (12); and
a control unit (90) configured to control operations of the broil heater (15), the convection heater (23), and the fan module (25),
wherein the control unit (90) is configured to sequentially perform a first heating operation of driving the broil heater (15) and a fan (26) of the fan module (25), and a second heating operation of driving the convection heater (23) and the fan (26).

12. The cooking appliance of claim 11, further comprising:
a door (30) disposed on a front side of the cavity (11) and configured to open and close the cooking chamber (12),
wherein the broil heater (15) is installed on a top surface of the cavity (12), and
the convection heater (23) and the fan module (25) are installed on a rear surface of the cavity (12).

13. The cooking appliance of claim 11 or 12, wherein the fan module (25) comprises a BLDC motor provided to be able to maintain a speed of the fan (26) at a set speed in a process of performing the first heating operation and the second heating operation.

14. The cooking appliance of any one of claim 11 to 13, wherein the fan module (25) is provided to be able to rotate the fan (26) in forward and reverse directions.

15. The cooking appliance of any one of claim 11 to 14, wherein an amount of heat per unit time supplied to the cooking chamber (12) by the broil heater (15) is higher than an amount of heat per unit time supplied to the cooking chamber (12) by the convection heater (23).
